Europäisches Patentamt

European Patent Office

Office européen des brevets

(11) Veröffentlichungsnummer: **0 263 896**
**B1**

(12) **EUROPÄISCHE PATENTSCHRIFT**

(45) Veröffentlichungstag der Patentschrift:
**12.09.90**

(21) Anmeldenummer: **86114405.3**

(22) Anmeldetag: **17.10.86**

(51) Int. Cl.⁵: **B61K 9/06**

(54) Verfahren zur externen Messung von Achs-bzw. Achslagertemperaturen an fahrenden Eisenbahnwagen und Vorrichtung zur Durchführung des Verfahrens.

(43) Veröffentlichungstag der Anmeldung:
**20.04.88 Patentblatt 88/16**

(45) Bekanntmachung des Hinweises auf die Patenterteilung:
**12.09.90 Patentblatt 90/37**

(84) Benannte Vertragsstaaten:
**AT CH DE FR GB IT LI SE**

(56) Entgegenhaltungen:
**WO-A-86/01893**
**GB-A- 966 676**
**US-A- 3 596 519**

(73) Patentinhaber: **SIGNALTECHNIK GmbH,
Ernst-Sachs-Strasse 2, D-5400 Koblenz(DE)**

(72) Erfinder: **Berndt, Dietmar, Dr., Im Baumstück 4,
D-5400 Koblenz(DE)**

(74) Vertreter: **Riecke, Manfred, Neuköllner Strasse 8,
D-6333 Braunfels(DE)**

## Beschreibung

Die Erfindung betrifft ein Verfahren und eine entsprechende Vorrichtung zur Messung der Temperatur der Achsen bzw. deren Lagern an vorüberfahrenden Eisenbahnwagen mittels eines an der Strecke installierten Meßgerätes.

Vorrichtungen dieser Art gehören seit langem dem Stand der Technik an und sind beschrieben z.B. in der DE-C 23 43 904 sowie der weiteren darin zitierten Literatur.

Allen diesen Vorrichtungen ist gemeinsam, daß ein Teil der von der Achse bzw. deren Lager emittierten infraroten Wärmestrahlen entlang einer von der Meßvorrichtung definierten optischen Achse einem IR-Sensor zugeführt werden. Der Sensor "betrachtet" somit entlang einer durch ihn selbst, durch eine vorgeschaltete Optik und durch Strahlenumlenkspiegel gegebenen Achse senkrecht oder schräg von unten die über ihn hinwegrollenden Achslager.

Wesentlich ist dabei, daß nach dem Stand der Technik diese optische Achse immer eine fest voreingestellte Abtastachse ist.

In der Praxis hat sich dies jedoch als ein gravierender Nachteil erwiesen, der die Lagertemperaturmessung ganz erheblich erschwert, wenn nicht gar gänzlich unmöglich macht.

Der Grund hierfür liegt darin, daß viele Achslager in einer relativ breiten Trägerkonstruktion gehalten werden, die überhaupt nur an einzelnen schmalen Stellen den "Blick" auf die wirklich temperaturführenden Teile des Lagers bzw. der Achse freigibt.

Der besondere Nachteil liegt nun darin, daß diese schmalen, quasi freien Stellen bei der Vielzahl der Lagerkonstruktionen und der ebenso großen Vielzahl der Trägerkonstruktionen immer wieder an einer anderen Stelle liegen, so daß es schon aus diesem Grunde technisch unmöglich ist, alle vorüberrollenden Lager entlang der gleichen fest voreingestellten Abtastachse zu erfassen und anzumessen.

Aber selbst wenn man unterstellen würde, daß auf einer gegebenen Eisenbahnstrecke immer nur Wagen mit der gleichen Lager-und Trägerkonstruktion verwendet werden, so daß die Abtastachse speziell auf die bei diesen Lagern gegebenen freien Stellen ausgerichtet werden könnte, wäre eine zuverlässige Temperaturmessung nicht möglich, weil nämlich die Räder auf den Gleisen mit seitlichem Spiel rollen. D.h. quer zur Fahrtrichtung gesehen, ist der innere Abstand der Gleise (Spurweite) grundsätzlich größer als der Abstand von Seitenführung zu Seitenführung eines Radsatzes. Dies hat zur Folge, daß bei der Fahrt die Eisenbahnwagen (und mit ihnen die Achslager) immer um dieses Spiel von einer Seite zur anderen "wackeln"; d.h. von oben gesehen laufen die Eisenbahnwagen immer entlang einer sinusähnlichen Kurve, wobei der seitliche Ausschlag umso größer ist, je mehr die Gleise und/oder die Radsätze abgenutzt sind. Aber auch bei neuen Gleisen und neuen Radsätzen ist dieser seitliche Ausschlag bereits groß genug, um zu bewirken, daß die Abtastachse nicht mehr mit Sicherheit die zur Temperaturmessung geeignete freie Stelle des Lagers trifft. Mit anderen Worten bedeutet dies, daß es ein reiner Zufall ist, ob bei einer fest voreingestellten Abtastachse bei einem vorüberrollenden Achslager eine Temperaturmessung überhaupt möglich ist.

Beide Merkmale zusammen genommen, nämlich die unterschiedliche räumlich-geometrische Anordnung der freien Stellen bei den verschiedenen Lager- und Trägerkonstruktionen plus dem Sinus lauf der Lager in Fahrtrichtung, stellen diejenigen Nachteile dar, die es - wie bereits ausgeführt - nahezu unmöglich machen, die Lager- bzw. Achstemperatur mit einer fest eingestellten Abtastachse zuverlässig anzumessen.

Der Erfindung liegt die Aufgabe zugrunde, diesen Nachteil zu überwinden.

Diese Aufgabe ist durch ein Verfahren zur externen Messung von Achs- bzw. Achslagertemperaturen gelöst, das die in Anspruch 1 angegebenen Merkmale aufweist. Spezielle Merkmale dieses Verfahrens sowie Merkmale von Vorrichtungen, die zur Durchführung des erfundenen Verfahrens geeignet sind, sind in den Unteransprüchen angegeben.

Gemäß Anspruch 1 besteht der Gegenstand der Erfindung darin, die Abtastachse senkrecht zur Fahrtrichtung der Eisenbahnwagen hin und her zu schwenken. Im Gegensatz zu den fest angeordneten Abtastachsen nach dem Stand der Technik wird an einem Lager damit nicht nur eine Linie abgetastet, sondern eine ganze Fläche, deren Abmessungen sich aus der Schwenkweite der Abtastachse und der Länge des Lagers in Fahrtrichtung ergibt.

Durch diese schwenkbare Abtastachse wird das Lager (und gegebenenfalls ein Teil der Achse) in seiner ganzen Breite erfaßt, so daß die Abtastachse, unabhängig von der geometrischen Form des Lagers und auch unabhängig von dem seitlichen Versatz des Lagers infolge des Laufspieles des Radpaares, bei jedem vorbeilaufenden Lager mindestens einmal auf ein temperaturführendes Lagerteil "blickt".

Damit ist die eingangs definierte Aufgabe gelöst. Es ist sichergestellt, daß jedes vorbeilaufende Lager zuverlässig angemessen wird.

Um sicherzustellen, daß bei derartigen Meßverfahren tatsächlich nur die vom Achslager emittierten IR-Strahlen für die Messung ausgewertet werden, ist es bekannt, die vom Achslager kommenden Strahlen mit einer bestimmten Frequenz zu zerhacken, d.h. zu choppen. Aus schaltungstechnischen Gründen ist es nun ratsam, die Schwenkfrequenz der Abtastachse mindestens so groß zu machen, wie die Chopperfrequenz, damit während eines Chopperpulses das gesamte Lager in seiner Breite mindestens einmal abgetastet wird. Es wird jedoch insbesondere vorgeschlagen, die Abtastfrequenz wesentlich größer zu machen als die Chopperfrequenz, denn damit wird erreicht, daß die gesamte Fläche auf dem Lager möglichst gleichmäßig abgetastet wird.

Da die Lager bzw. die Achse, je nach Konstruktion, über ihre Gesamtbreite unterschiedlich warm sind, aber für die Temperaturmessung jeweils nur die höchste Temperatur von Interesse ist, und außerdem bei der Auswertung ein Vergleich der Achslagertemperaturen auf der linken und auf der rechten Seite eines Radsatzes erfolgt, ist es unerläßlich, von den vielen bei hoher Abtastfrequenz über ein Lager auftretenden Meßwerten, nur den Spitzenwert festzuhalten. Dieser Spitzenwert kann entweder mittels eines analogen Spitzenwerthalters oder mittels eines digitalen Spitzenwerthalters gehalten werden. Die Auswertung des gewonnenen Signales erfolgt in beiden Fällen erst nach Vorbeifahrt des Lagers.

Als die Schwenkung der Abtastachse bewirkendes Bauelement kann in einer Vorrichtung zur Durchführung des erfunden Verfahrens im Meßstrahlengang ein Schwingspiegel angeordnet sein, der den IR-Strahlengang vom Lager zum IR-Sensor mit seiner Optik umlenkt, und der um einen Nullpunkt herum schwingt. In bekannter Weise braucht er dabei nur um den Winkel $\alpha/2$ zu schwingen, wenn die vom Achslager emittierten Strahlen aus einem Winkel $\alpha$ eingefangen werden sollen. Die Gesamtanordnung des Meßgerätes kann dabei mechanisch derart realisiert sein, daß die dem Sensor vorgeschaltete Optik direkt auf den Schwingspiegel sieht, es können im Strahlengang aber auch noch zusätzliche, fest angeordnete Umlenkelemente vorgesehen sein. Der Schwingspiegel kann z.B. ein Torsionsstabspiegel oder auch ein Galvanometerbandspiegel sein.

Der Spiegel und der vorrichtungsinterne Choppermechanismus können elektronisch miteinander gekoppelt sein, derart daß ihre Frequenzen in einer festen Relation zueinander stehen. Dies ergibt ein definiertes Abtastpunktemuster entlang des Achslagers. Schwingen der Spiegel und der Choppermechanismus jedoch unabhängig voneinander, so ergibt sich auf dem Lager ein statistisch verteiltes Abtastpunktemuster.

In der Zeichnung ist die Erfindung in mehreren Ausführungsbeispielen dargestellt.

Es zeigen:

Fig. 1 schematisch die Anordnung einer Meßvorrichtung mit Schwingspiegel unter einem Achslager von einer ersten konstruktiven Gestaltung,

Fig. 2 schematisch die Anordnung einer Meßvorrichtung mit Schwingspiegel unter einem Achslager von einer zweiten konstruktiven Gestaltung,

Fig. 3 schematisch die Anordnung einer Meßvorrichtung mit Schwingspiegel unter einem Achslager von einer dritten konstruktiven Gestaltung,

Fig. 4 schematisch die Anordnung einer Meßvorrichtung mit reflektivem Polygon unter einem Achslager von der ersten konstruktiven Gestaltung, und

Fig. 5 schematisch die Auswerteschaltung mit eingefügtem Spitzenwerthalter.

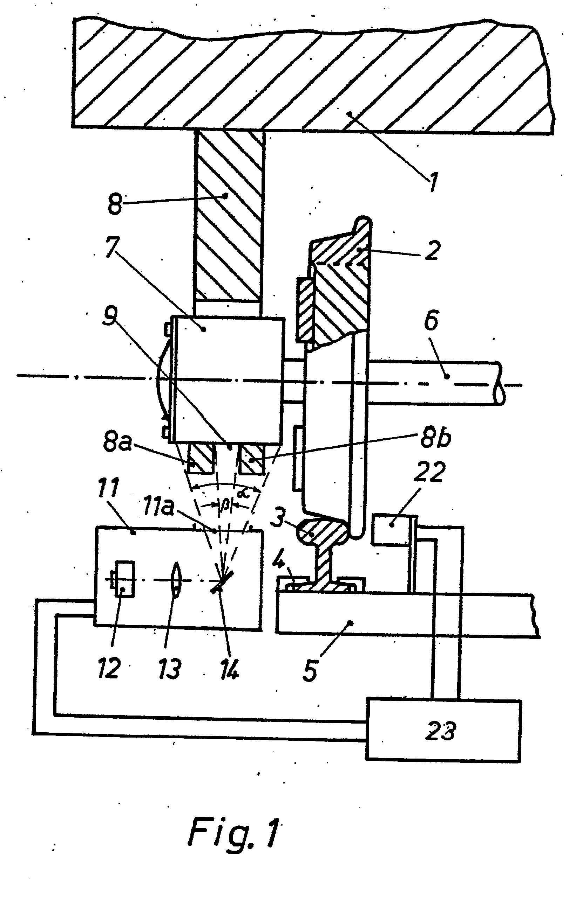

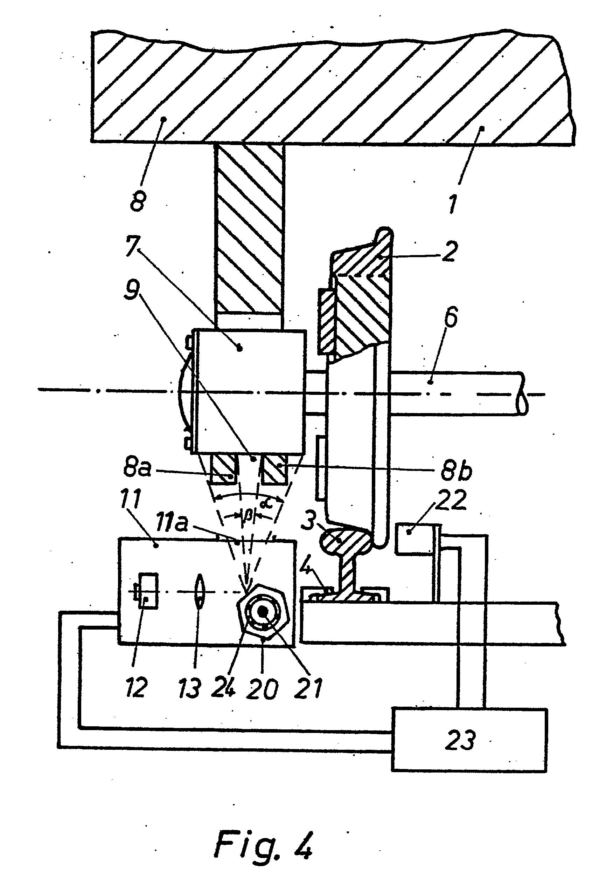

Die Erfindung ist am leichtesten verständlich bei einem Vergleich der Figuren 1-3. In diesen Figuren, ebenso wie in Fig.4, ist mit 1 ein Teil eines Eisenbahnwagens bezeichnet, der auf Rädern 2 entlang einer Eisenbahnschiene 3 rollt, die mit Haltenägeln 4 auf Schwellen 5 festgelegt ist.

Das Rad 2 sitzt auf einer Achse 6, die in einem Lager 7 läuft, das seinerseits von einem Träger 8 unterhalb des Eisenbahn wagens 1 gehalten wird.

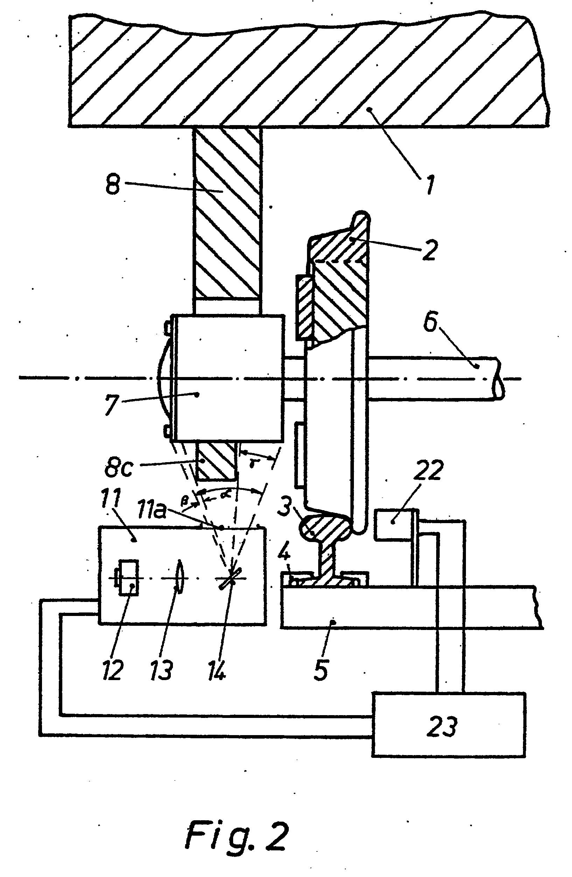

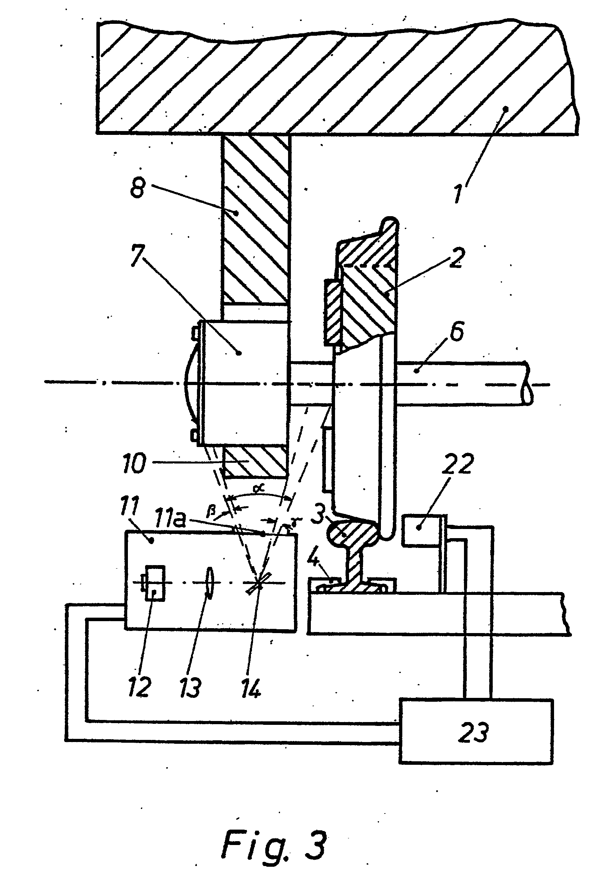

Ein Vergleich der Figuren 1, 2 und 3 zeigt, daß die unterhalb des Lagers 7 befindlichen Teile des Trägers 8 jeweils konstruktiv andersartig gestaltet sind. Während in Fig.1 unterhalb des Lagers 7 zwei Traversen 8a, 8b sitzen, welche wesentliche Teile des eigentlichen temperaturführenden Lagers abdecken und nur einen kleinen Spalt 9 freilassen, befindet sich in Fig.2 nur eine Traverse 8c unterhalb des Lagers 7, die jedoch praktisch den gesamten äußeren Teil des Lagers 7 abdeckt. Und schließlich zeigt Fig.3 noch eine Trägerkonstruktion, bei der eine Traverse 10 tatsächlich das gesamte Lager 7 von unten verdeckt.

Diese drei Ausführungsformen der Trägerkonstruktion wurden gewählt, um zu verdeutlichen, daß bei unterschiedlichen Eisenbahnwagen die Trägerkonstruktionen an der Lagerunterseite jeweils unterschiedliche Stellen des Lagers 7 freigeben, an denen eine Messung der Lagertemperatur überhaupt nur möglich ist. Bei dem Ausführungsbeispiel gemäß Fig.3 wird sogar das ganze Lager von unten verdeckt, so daß die Achse selbst angemessen werden muß, um eine Information darüber zu gewinnen, ob die Achs- bzw. Achslagertemperatur eventuell die zulässsige Höchstgrenze überschritten hat.

Es ist offensichtlich, daß derart unterschiedlich gestaltete Lager nicht mit einem Verfahren bzw. einer Vorrichtung mit feststehender, starr nach oben gerichteter Abtastachse angemessen werden können.

Die Figuren 1-3 zeigen ferner eine in einem Gehäuse 11 angeordnete Meßvorrichtung, die im wesentlichen aus einem IR-Sensor mit Choppermechanismus 12, einer vorgeschalteten Optik 13 sowie einem als Schwingspiegel 14 ausgebildeten Umlenkspiegel besteht. Weitere Umlenkelemente können im optischen Strahlengang je nach Bedarf angeordnet sein. Sie sind jedoch nicht erfindungswesentlich und daher nicht gezeigt.

Erfindungswesentlich ist jedoch, daß der Umlenkspiegel als Schwingspiegel 14 ausgebildet ist, und um seine Mittelstellung um einen Winkel $\pm \alpha/4$ oszilliert, so daß über ihn vom Lager 7 IR-Strahlen aus einem Winkel $\alpha$ zum IR-Sensor 12 reflektiert werden.

Wie aus den Figuren leicht erkennbar, hat die konkrete Ausgestaltung der Trägerkonstruktion unterhalb des Lagers 7 bei Verwendung des erfindungsgemäßen Schwingspiegels 14 keinen Einfluß mehr darauf, daß IR-Strahlen zum Sensor 12 gelangen. Innerhalb des Winkels $\alpha$ findet sich bei jeder Konstruktion eine freie Stelle, an der die Abtastachse über wirklich temperaturführende Teile des Lagers 7 streicht, so daß in jedem Falle IR-Strahlen zum Sensor 12 reflektiert werden. Die Winkel, innerhalb derer dies der Fall ist, sind in Fig.1 mit $\beta$ und in den Fig. 2 und 3 mit $\beta$ und $\gamma$ bezeichnet. Dabei sei besonders darauf hingewiesen, daß bei der Ausführungsform gemäß Fig.3 im Winkel $\gamma$ bereits die Achse 6 angemessen wird.

Es ist auch leicht verständlich, daß es bei einem Meßverfahren mit oszillierender Abtastachse keine Rolle spielt, wenn die Lager infolge des Spieles zwischen Radsatzbreite und Spurweite des Gleises (= sinusähnliches Ausschwingen der Eisenbahnwagen in Fahrtrichtung) seitlich versetzt über die Meßvorrichtung hinwegrollen. Von der oszillierenden Abtastachse wird auf alle Fälle ein temperaturführendes Lager- bzw. Achsteil abgetastet, so daß eine Temperaturmessung auch bei ungünstigsten geometrischen Bedingungen möglich ist.

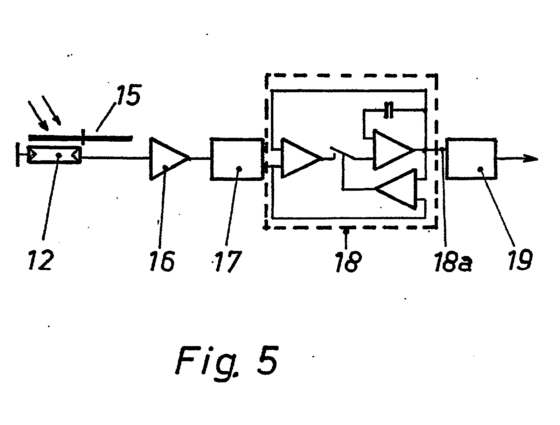

Wie bereits ausgeführt, werden die dem Sensor 12 zugeführten IR-Strahlen in einem Choppermechanismus gechoppt, und es wurde schon erwähnt, daß die Schwingfrequenz der Abtastachse höher sein soll, als die Chopperfrequenz, mindestens jedoch gleich dieser. Man erhält daher beim Vorbeilauf eines Radlagers 7 oberhalb der Meßvorrichtung eine Vielzahl von Temperaturmessungen, die von unterschiedlich erwärmten Teilen des Lagers bzw. der Achse stammen. Für die Überwachung der Lagertemperaturen interessiert aber jeweils nur die höchste Temperatur. Die dem IR-Sensor nachgeschaltete, hier aber nicht weiter gezeigte Auswerteschaltung enthält daher einen gewöhnlich als "Spitzenwerthalter" (peak hold) bezeichneten elektronischen Baustein. Derartige Bausteine sind dem Fachmann auf dem Gebiete der Elektronik bekannt und für sich selbst genommen nicht Gegenstand der vorliegenden Erfindung. Es sei lediglich darauf hingewiesen, daß der Spitzenwert sowohl in analoger Form als auch in digitaler Form festgehalten bzw. abgespeichert werden kann. In Fig.5 ist, lediglich der Vollständigkeit halber, eine schematische Darstellung eines Teiles der Auswerteschaltung gezeigt, nämlich desjenigen Teiles, der den Spitzenwerthalter enthält. Man erkennt links hinter einem Choppermechanismus 15 den IR-Sensor 12, dem ein Vorverstärker 16, dann ein Bandpass 17 und der Spitzenwerthalter 18 nachgeschaltet sind. Der Ausgang 18a des Spitzenwerthalters 18 führt zu einem Analog/Digital-Wandler 19, woraus erkennbar ist, daß im vorliegenden Falle der Spitzenwert in analoger Form gehalten wird. An den A/D-Wandler 19 ist die weitere Auswerteschaltung z.B. in Form eines Mikroprozessors angeschaltet. In Schaltungen, in denen der Spitzenwert in digitaler Form abgespeichert wird, ist der Spitzenwerthalter dem A/D-Wandler nachgeschaltet.

In Fig.4 ist eine Vorrichtung zur Durchführung des erfundenen Verfahrens gezeigt, bei welcher der Schwingspiegel 14 durch ein rotierendes reflexives Polygon 20 ersetzt ist. Das Polygon 20 dreht sich um die Achse 21 mit seinen Spiegelflächen unter dem Lager 7 vorbei und schwenkt dabei die Abtastachse über das Lager 7 hinweg. Dabei werden ebenfalls IR-Strahlen aus dem Winkel α zum Sensor 12 reflektiert. Mittels einer synchron laufenden Codierscheibe 24 wird aus dem Gesamtdrehwinkel der einzelnen Polygonfläche unterhalb der Öffnung 11a der Meßwinkel α definiert. Der Unterschied zur Ausführungsform mit Schwingspiegel besteht lediglich darin, daß die Abtastachse in Abhängigkeit von der Drehrichtung des Polygons immer in einer Richtung über das Radlager 7 wandert, während sie bei Verwendung eines Schwingspiegels über das Lager 7 hin und zurück wandert.

In den Fig. 1-4 ist ferner der Vollständigkeit halber noch eine Torschaltung dargestellt, die zum Öffnen und Schließen der Öffnung 11a des Gehäuses 11 dient, durch die hindurch die IR-Strahlen in das Gehäuse 11 einfallen. Die Schaltung besteht aus einem nahe dem Gleis angeordneten Gleisschaltmittel 22, das über eine Steuerschaltung 23 beim Herannahen eines Zuges eine nicht gezeigt Klappe über der Öffnung 11a aufklappt und geöffnet hält. Gleiche Schaltmittel, die weiter in Fahrtrichtung angeordnet sind, schließen die Klappe wieder, nachdem der Zug vorbeigerollt ist. Es ist selbstverständlich, daß die Gleisschaltmittel 22 in ausreichendem Abstand nach beiden Seiten vom Gehäuse 11 angeordnet sind.

## Patentansprüche

1. Verfahren zur externen Messung von Achsbzw. Achslagertemperaturen an fahrenden Eisenbahnwagen mittels eines neben dem Gleis fest installierten IR-Sensors, dem über eine vorgeschaltete Optik und gegebenenfalls geeignete Umlenkmittel entlang der durch die optische Achse der Optik und der Umlenkmittel definierten Abtastachse ein Teil der von dem Lager bzw. der Achse emitierten Wärmestrahlen zugeleitet wird, die vor Auftreffen auf den Sensor in einer geeigneten Frequenz zerhackt (gechoppt) werden, dadurch gekennzeichnet, daß die Abtastachse etwa senkrecht zur Fahrtrichtung des Eisenbahnwagens (1) kontinuierlich um einen Winkel (α/2) hin und her geschwenkt wird, dessen Bogenmaß unter Berücksichtigung des Abstandes von der Winkelspitze zum Achslager (7) mindestens die Länge des breitesten abzutastenden Achslagers (7) besitzt.

2. Verfahren nach Anspruch 1, dadurch gekennzeichnet, daß die Schwenkfrequenz der Abtastachse mindestens gleich, vorzugsweise jedoch höher ist, als die Frequenz mit der die einfallenden Wärmestrahlen vor Auftreffen auf den IR-Sensor (12) gechoppt werden.

3. Vorrichtung zur Durchführung des Verfahrens nach den Ansprüchen 1 und 2, bestehend aus einem IR-Sensor, einer vorgeschalteten Optik, einem internen Choppermechanismus und mindestens einem Umlenkspiegel, dadurch gekennzeichnet, daß der Umlenkspiegel ein Schwingspiegel (14) ist, der mit mindestens der Chopperfrequenz, vorzugsweise jedoch mit einer höheren Frequenz um einen Winkel (α/2) um seine Mittelstellung oszilliert.

4. Vorrichtung nach Anspruch 3, dadurch gekennzeichnet, daß die Größe der Winkelauslenkung des Schwingspiegels (14) einstellbar ist,

5.) Vorrichtung nach den Ansprüchen 3 und 4, dadurch gekennzeichnet, daß der Nullpunkt der Winkelauslenkung des Winkelspiegels (14) verstellbar ist.

6. Vorrichtung zur Durchführung des Verfahrens nach den Ansprüchen 1 und 2, bestehend aus einem IR-Sensor, einer vorgeschalteten Optik, einem internen Choppermechanismus und mindestens einem Umlenkspiegel, dadurch gekennzeichnet, daß der Umlenkspiegel ein rotierendes reflexives Polygon (20) ist, dessen Rotationsgeschwindigkeit n dividiert durch die Anzahl der Polygonflächen mindestens gleich, vorzugsweise jedoch höher ist als die Chopperfrequenz.

7. Vorrichtung zur Durchführung des Verfahrens nach den Ansprüchen 1 und 2, bestehend aus einem IR-Sensor, einer vorgeschalteten Optik, einem internen Choppermechanismus und mindestens einem Umlenkspiegel, dadurch gekennzeichnet, daß der Umlenkspiegel ein rotierendes refraktives Polygon ist, dessen Rotationsgeschwindigkeit n dividiert durch die Polygonflächenpaare mindestens gleich, vorzugsweise jedoch höher ist, als die Chopperfrequenz.

8. Vorrichtung nach einem der Ansprüche 3 - 7, dadurch gekennzeichnet, daß dem IR-Sensor (12) ein analoger Spitzenwerthalter (18) nachgeschaltet ist.

9. Vorrichtung nach einem der Ansprüche 3 - 7, dadurch gekennzeichnet, daß dem IR-Sensor (12) ein digitaler Spitzenwerthalter nachgeschaltet ist.

**Revendications**

1. Procédé pour la mesure externe de la température de l'essieu, respectivement du palier de l'essieu de wagons de chemin de fer en marche au moyen d'un détecteur à IR fixe près de la voie ferrée et auquel est amenée une partie des rayons thermiques émis par le palier respectivement de l'essieu qui passent auparavant dans un système optique et éventuellement à travers des moyens de déviation appropriés le long de l'axe de détection défini par l'axe optique dudit système optique et dudit moyen de déviation, lesdits rayons thermiques étant hachés à une fréquence appropriée avant de venir frapper le détecteur, caractérisé en ce que l'axe de détection oscille de manière continue autour d'un angle ($\alpha/2$) dans le sens sensiblement perpendiculaire à la direction du mouvement du wagon (1), le radian dudit angle étant au moins égal à la longueur du palier d'essieu (7) le plus large, compte tenu de la distance entre le sommet de l'angle et ledit palier d'essieu (7).

2. Procédé selon la revendication 1, caractérisé en ce que la fréquence d'oscillation de l'axe de détection est au moins égale, mais de préférence supérieure à la fréquence à laquelle les rayons thermiques incidents sont hachés avant de frapper le détecteur IR (12).

3. Dispositif pour la mise en oeuvre du procédé selon les revendications 1 et 2 constitué d'un détecteur IR d'un système optique monté en amont, d'un mécanisme hacheur interne et d'au moins un miroir de renvoi, caractérisé en ce que le miroir de renvoi est un miroir oscillant (14) qui oscille sur un angle ($\alpha/2$) autour de sa position médiane à une fréquence au moins égale à la fréquence du hâcheur mais de préférence supérieure à celle-ci.

4. Dispositif selon la revendication 3, caractérisé en ce que l'amplitude de la déviation angulaire du miroir oscillant (14) est réglable.

5. Dispositif selon les revendications 3 et 4, caractérisé en ce que le point zéro de la déviation angulaire du miroir oscillant (14) est réglable.

6. Dispositif pour la mise en oeuvre du procédé selon les revendications , et 2 constitué d'un détecteur IR, d'un système optique monté en amont, d'un mécanisme hacheur interne et d'au moins un miroir de renvoi, caractérisé en ce que le miroir de renvoi est un polygone rotatif réfléchissant (20) dont la vitesse de rotation n divisée par le nombre des faces du polygone est au moins égale mais de préférence supérieure à la fréquence du hacheur.

7. Dispositif pour la mise en oeuvre du procédé selon les revendications 1 et 2 constitué d'un détecteur IR, d'un système optique monté en amont, d'un mécanisme hacheur interne et d'au moins un miroir de renvoi caractérisé en ce que le miroir de renvoi est un polygone rotatif, à réfraction dont la vitesse de rotation divisée par les paires de faces du polygone est au moins égale mais de préférence supérieure à la fréquence du hacheur.

8. Dispositif selon l'une des revendications 3 à 7, caractérisé en ce qu'un dispositif analogue (18) de conservation de l'amplitude maximale est monté en aval du détecteur (12).

9. Dispositif selon l'une des revendications 3 à 7, caractérisé en ce qu'un dispositif digital de conservation de l'amplitude maximale est monté en aval du détecteur IR (12).

**Claims**

1. Method for the external measurement of temperatures of axles or axle bearings at travelling railway wagons by means of an infra-red sensor, which is firmly installed beside the track and to which a part of the heat rays, which are emitted by the bearing or the axle and chopped at a suitable frequency before impinging on the sensor, is conducted by way of an upstream optical system and, in a given case, suitable deflecting means along the scanning axis defined by the optical axis of the optical system and the deflecting means, characterised thereby, that the scanning axis is pivoted to and fro continuously through an angle ($\alpha/2$) about perpendicularly to the direction of travel of the railway wagon, wherein the arc length of the angle, taking into consideration the distance from the apex of the angle to the axle bearing (7), possesses at least the length of the widest axle bearing (7) to be scanned.

2. Method according to claim 1, characterised thereby, that the frequency of pivotation of the scanning axis is at least equal, preferably however higher than the frequency, at which the incident heat rays are chopped before impinging on the infra-red sensor (12).

3. Device for the performance of the method according to the claims 1 and 2 and consisting of an infra-red sensor, an upstream optical system, an internal chopper mechanism and at least one deflecting mirror, characterised thereby, that the deflecting mirror is an oscillatory mirror (14), which oscillates about its mid-position through an angle ($\alpha/2$) at at least the chopper frequency, preferably however at a higher frequency.

4. Device according to claim 3, characterised thereby, that the magnitude of the angular deflection of the oscillatory mirror (14) is settable.

5. Device according to the claims 3 and 4, characterised thereby, that the zero point of the angular deflection of the oscillatory mirror (14) is adjustable.

6. Device for the performance of the method according to the claims 1 and 2 and consisting of an infra-red sensor, an upstream optical system, an internal chopper mechanism and at least one deflecting mirror, characterised thereby, that the deflecting mirror is a rotating reflective polygon (20), the rotational speed n of which when divided by the number of the polygon surfaces is at least equal to, preferably however higher than the chopper frequency.

7. Device for the performance of the method according to the claims 1 and 2 and consisting of an infra-red sensor, an upstream optical system, an internal chopper mechanism and at least one deflecting mirror, characterised thereby, that the deflecting mirror is a rotating reflective polygon, the rotational speed n of which when divided by the polygon surface pairs is at least equal to, preferably however higher than the chopper frequency.

8. Device according to one of the claims 3 to 7, characterised thereby, that an analog peak value store (18) is connected behind the infra-red sensor (12).

9. Device according to one of the claims 3 to 7, characterised thereby, that a digital peak value store is connected behind the infra-red sensor (12).

Fig. 1

*Fig. 2*

*Fig. 3*

Fig. 4

Fig. 5